# EUROPEAN PATENT APPLICATION

(11) **EP 4 295 930 A1**
(43) Date of publication of application: **27.12.2023**
(21) Application number: 23179576.6
(22) Date of filing: 15.06.2023
(51) Int. Cl.: A63F 13/5255, A63F 13/61, A63F 13/65, H04N 21/218, H04N 21/81

(54) **IMAGE PROCESSING SYSTEM, IMAGE PROCESSING METHOD, AND COMPUTER PROGRAM**

(30) Priority: 17.06.2022 JP 2022098479
(71) Applicant: CANON KABUSHIKI KAISHA, Tokyo 146-8501 (JP)
(72) Inventor: MIZUNO, Shogo, Tokyo, 146-8501 (JP)
(74) Representative: Canon Europe Limited

(57) **Abstract**

An image processing system includes a first acquisition means for acquiring a visual field of a virtual camera that changes in position relative to a region where a first virtual object and a second virtual object are displayed interchangeably, a second acquisition means for acquiring, during a time in which the region is in the visual field of the virtual camera, a first display time indicating a time during which the first virtual object is displayed in the region and a second display time indicating a time during which the second virtual object is displayed in the region, and a generation means for generating, based on the first display time and the second display time, a virtual viewpoint image corresponding to the virtual camera, wherein the virtual viewpoint image includes one of the first virtual object and the second virtual object.

## Description

### BACKGROUND OF THE INVENTION

### Field of the Invention

The present disclosure relates to an image processing system, an image processing method, and a computer program.

### Description of the Related Art

Techniques are known for generating a virtual viewpoint image from a plurality of imaging apparatuses. Such techniques comprise installing a plurality of imaging apparatuses at different positions, synchronously capturing images from multiple viewpoints using the imaging apparatuses, and generating a virtual viewpoint image based on (i) the images captured from the multiple viewpoints and (ii) a specified virtual viewpoint.

Japanese Patent Application Laid-Open No. 2014-041259 discusses a technique of providing a virtual advertisement frame on a virtual space, based on the position and orientation of a virtual camera, in order to display a virtual advertisement. The virtual advertisement is an example of a virtually-generated object (hereinafter referred to as a "virtual object"). The technique includes displaying the virtual advertisement in the virtual advertisement frame, and charging an advertisement fee.

In a case where a plurality of virtual advertisements is displayed interchangeably in the virtual advertisement frame (e.g., the virtual advertisement frame can be switched between displaying two or more of the plurality of virtual advertisements), a virtual viewpoint image that does not include the virtual advertisement frame may be generated depending on the visual field of the virtual camera, and each of the virtual advertisements may not be able to be displayed appropriately in the virtual viewpoint image. Also, in a case where a virtual advertisement is another virtual object, a virtual viewpoint image that does not include a display region for displaying the virtual object may be generated, and a similar issue may occur.

### SUMMARY OF THE INVENTION

The present disclosure is directed to displaying, in a case where a plurality of virtual objects is displayed interchangeably in a display region, each of the objects appropriately in a virtual viewpoint image.

According to a first aspect of the present disclosure, there is provided an image processing system as specified in claims 1 to 12. According to a second aspect of the present disclosure, there is provided an image processing method as specified in claim 13. According to a third aspect of the present disclosure, there is provided a computer program as specified in claim 14.

Further features of the present invention will become apparent from the following description of embodiments with reference to the attached drawings.

### BRIEF DESCRIPTION OF THE DRAWINGS

Fig. 1 is a diagram illustrating an image processing system.
Fig. 2 is a diagram illustrating an installation example of imaging apparatuses.
Fig. 3 is a block diagram illustrating a hardware configuration of an image generation apparatus.
Fig. 4 is a block diagram illustrating a functional configuration of an image generation apparatus according to a first embodiment.
Fig. 5 is a flowchart illustrating an operation procedure performed by the image generation apparatus according to the first embodiment.
Fig. 6 is a conceptual diagram illustrating a virtual space according to the first embodiment.
Fig. 7 is a diagram illustrating examples of virtual advertisement images according to the first embodiment.
Fig. 8 is a diagram illustrating display priorities of the virtual advertisement images according to the first embodiment.
Figs. 9A and 9B are diagrams illustrating screen display examples according to the first embodiment.
Fig. 10 is a block diagram illustrating a functional configuration of an image generation apparatus according to a second embodiment.
Fig. 11 is a flowchart illustrating an operation procedure performed by the image generation apparatus according to the second embodiment.
Fig. 12 is a conceptual diagram illustrating a virtual space according to the second embodiment.
Fig. 13 is a diagram illustrating correspondence relationships between virtual advertisement images and virtual advertisement frames according to the second embodiment.
Fig. 14 is a diagram illustrating a screen display example according to the second embodiment.
Fig. 15 is a block diagram illustrating a functional configuration of an image generation apparatus according to a third embodiment.
Fig. 16 is a flowchart illustrating an operation procedure performed by the image generation apparatus according to the third embodiment.
Fig. 17 is a diagram illustrating display priorities of virtual advertisement images according to the third embodiment.

### DESCRIPTION OF THE EMBODIMENTS

Embodiments (e.g., exemplary arrangements/aspects) of the present disclosure will be described below with reference to the drawings. The present disclosure is not limited to the embodiments described below. In the drawings, similar members or elements are given the same reference numerals, and redundant descriptions thereof will be omitted or simplified.

In a first embodiment, a case where a plurality of virtual advertisements is displayed interchangeably in a single virtual advertisement frame will be described. While the present disclosure refers to "virtual advertisements", the embodiments are not limited thereto, and can be applied to any virtual objects. Specific examples of the virtual objects include two-dimensional images, character strings, three-dimensional avatars, and three-dimensional polyhedral (e.g., cube-shaped) digital content. In such a case, a plurality of virtual objects is displayed interchangeably in a single display region (e.g., the single display region is switchable between two or more of the plurality of virtual objects). The file format of two-dimensional virtual advertisement data and two-dimensional image data is not particularly limited, and can be a Portable Network Graphics (PNG) format or a Joint Photographic Experts Group (JPEG) format. The file format of three-dimensional avatar data and three-dimensional digital content data is also not particularly limited, and can be a Standard for the Exchange of Product Data (STP) format or an Object File (OBJ) format.

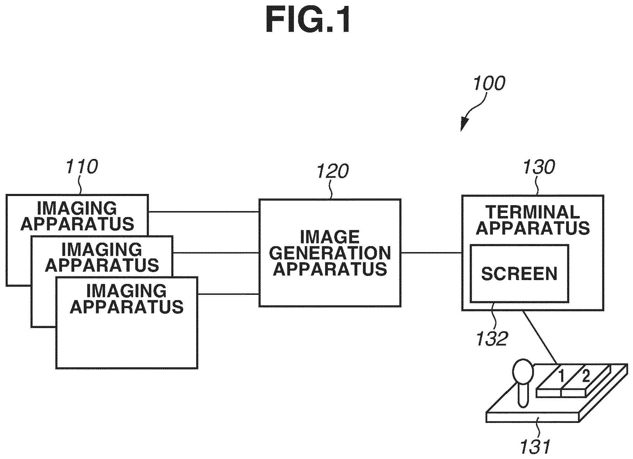

Fig. 1 is a diagram illustrating an image processing system 100 according to the present embodiment.

The image processing system 100 includes a plurality of imaging apparatuses 110, an image generation apparatus 120, and a terminal apparatus 130. Each of the imaging apparatuses 110 and the image generation apparatus 120 are connected to each other via a communication cable such as a local area network (LAN) cable. While the communication cables are LAN cables in the present embodiment, the communication cables according to the present embodiment are not limited thereto.

The image processing system 100 generates a virtual viewpoint image representing a scene from a specified virtual viewpoint, based on a plurality of images captured by the plurality of imaging apparatuses 110 and the specified virtual viewpoint. A virtual viewpoint image according to the present embodiment is also referred to as a free viewpoint video image, but is not limited to an image corresponding to a viewpoint specified freely (optionally) by a user. Examples of the virtual viewpoint image include an image corresponding to a viewpoint selected from among a plurality of candidates by a user. While a case where a virtual viewpoint is specified by a user operation is mainly described in the present embodiment, a virtual viewpoint can be specified automatically based on, for example, an image analysis result. While a case where a virtual viewpoint image is a moving image is mainly described in the present embodiment, a virtual viewpoint image can be a still image.

Each of the imaging apparatuses 110 is, for example, a digital camera capable of capturing images (e.g., still images and moving images). Each of the imaging apparatuses 110 can include not only a camera unit but also a functional unit that performs image processing. Each of the imaging apparatuses 110 can also include a sensor that acquires distance information in addition to the camera unit.

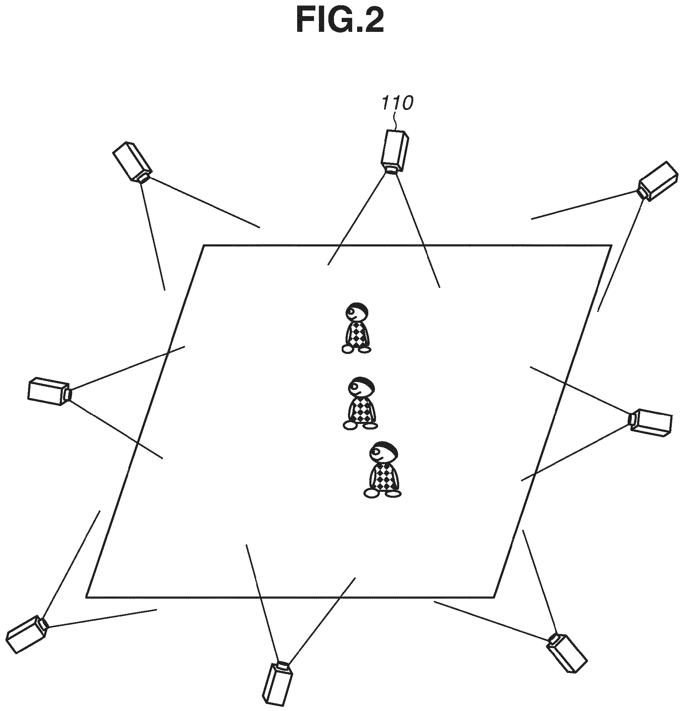

Fig. 2 is a diagram illustrating an installation example of the imaging apparatuses 110. The imaging apparatuses 110 are installed to surround an imaging region of a stadium from a plurality of directions and capture images (e.g., video images) of subjects in the imaging region. The imaging region can correspond to a three-dimensional space for estimating three-dimensional shapes of the subjects. The three-dimensional space can be the entire imaging region or a part of the imaging region. The imaging region is not limited to a stadium and can be, for example, a concert venue or an imaging studio. The captured images are transmitted from the imaging apparatuses 110 to the image generation apparatus 120.

The image generation apparatus 120 stores the captured images acquired by the imaging apparatuses 110. In a case where virtual viewpoint information and reproduction time information are received based on user operations on the terminal apparatus 130, the image generation apparatus 120 generates a virtual viewpoint image based on the captured images and the virtual viewpoint information. The virtual viewpoint information herein is information indicating the three-dimensional position and angle of a virtual viewpoint in a virtual space constructed from the captured images. The virtual viewpoint information is information indicating the position and orientation (e.g., line-of-sight direction) of the virtual viewpoint. More specifically, the virtual viewpoint information is a parameter set including a parameter representing the three-dimensional position of the virtual viewpoint and a parameter representing the orientation of the virtual viewpoint in pan, tilt, and roll directions. Details of the virtual viewpoint information are not limited to those described above. For example, the parameter set as the virtual viewpoint information can include a parameter representing the size of the visual field (e.g., the angle of view) of the virtual viewpoint. The virtual viewpoint information can also include a plurality of parameter sets. For example, the virtual viewpoint information can include a plurality of parameter sets respectively corresponding to a plurality of frames of a moving image as a virtual viewpoint image and indicate the position and orientation of the virtual viewpoint at each of a plurality of consecutive points of time.

A virtual camera is different from the plurality of imaging apparatuses 110 actually installed around the imaging region and is a concept for conveniently describing a virtual viewpoint for generating a virtual viewpoint image. More specifically, a virtual viewpoint image can be considered as an image captured from a virtual viewpoint set in a virtual space associated with the imaging region. The position and orientation of the viewpoint in such virtual imaging can be represented as the position and orientation of the virtual camera. In other words, a virtual viewpoint image is an image which simulates an image that would be captured by a camera if it were positioned at a virtual viewpoint set in a space. It is not essential to use the concept of the virtual camera to implement the configuration according to the present embodiment. It is sufficient to set at least information indicating a specific position and/or orientation (e.g., of the virtual camera) in a space and generate a virtual viewpoint image based on the set information.

The image generation apparatus 120 is, for example, a server apparatus and has a database function and an image processing function. In the database, images of scenes without subjects, such as those captured before start of imaging the subjects in a stadium, are stored in advance as background images via the imaging apparatuses 110. In images of scenes with the subjects, the foreground, such as specific objects as the subjects, is separated as specific object images (e.g., foreground images) by image processing. The specific objects can be not only persons but also physical objects with predetermined equipment image patterns, such as balls.

Foreground images are obtained by extracting object regions (e.g., foreground regions) from the captured images acquired by the imaging apparatuses 110. Objects to be extracted as the foreground regions are dynamic objects (e.g., moving objects) that are moving (e.g., that can change in absolute position and/or shape) in a case where time-series images are captured from the same direction. Examples of the objects include persons in a game, such as players and a referee in a field where the game is played, a ball in a ball game, or a singer, a player, a performer, or a host in a concert or an entertainment event.

The background images are images of regions (e.g., background regions) that are different from at least the objects as the foreground. More specifically, the background images are obtained by removing the objects as the foreground from the captured images. The background refers to an imaging target object that is still or is continuously in a substantially still state in a case where time-series images are captured from the same direction. Examples of such an imaging target object include a stage in a concert, a stadium where an event such as a competition is held, a structure such as a goal in a ball game, or a field. The background is a region that is different from at least the objects as the foreground, and the imaging target can include an object, the background, and other physical objects.

A virtual viewpoint image corresponding to virtual viewpoint information is generated based on the background images managed in the database and the specific object images. A virtual viewpoint image is generated by, for example, the following method. First, the plurality of imaging apparatuses 110 captures a plurality of images from different directions to acquire a plurality of captured images (e.g., a plurality of viewpoint images). Next, the foreground images are obtained by extracting the foreground regions corresponding to predetermined objects such as a person and a ball from the plurality of viewpoint images, and the background images are obtained by extracting the background regions other than the foreground regions from the plurality of viewpoint images. Further, foreground models representing the three-dimensional shapes of the predetermined objects and texture data for coloring the foreground models are generated based on the foreground images, and texture data for coloring background models representing the three-dimensional shapes of the background such as a stadium is generated based on the background images. Then, the texture data for the foreground models is mapped on the foreground models, and the texture data for the background models is mapped on the background models, followed by rendering based on a virtual viewpoint indicated by the virtual viewpoint information, whereby a virtual viewpoint image is generated. The method for generating a virtual viewpoint image is not limited thereto, and various methods such as a method for generating a virtual viewpoint image using projective transformation of captured images without three-dimensional models can be used. The generated virtual viewpoint image is transmitted to the terminal apparatus 130 via a LAN cable.

Referring to Fig. 1, the terminal apparatus 130 is, for example, a personal computer (PC) or a tablet. A controller 131 connected to the terminal apparatus 130 is, for example, a mouse, a keyboard, a six-axis controller, or a touch panel, and is operated by a user.

The terminal apparatus 130 displays the virtual viewpoint image received from the image generation apparatus 120 on a display unit 132. The terminal apparatus 130 converts user operations from the controller 131 into reproduction time information and virtual viewpoint information (e.g., position movement instruction information indicating instructions about a movement amount and a movement direction of the virtual viewpoint), and transmits the reproduction time information and the virtual viewpoint position movement instruction information to the image generation apparatus 120.

The user can move the virtual viewpoint position using the controller 131. The reproduction time and the virtual viewpoint information are not limited to a reproduction time and a continuous movement of a virtual viewpoint position. A movement to a predetermined virtual viewpoint position set in advance, such as a position in front of, behind, or above a subject in a virtual space, is also possible. A reproduction time can be preset to enable instant movement to the reproduction time. The virtual viewpoint information includes parameters indicating the position and orientation of a continuous virtual viewpoint indicating the amount of movement and the direction of movement corresponding to the above movement.

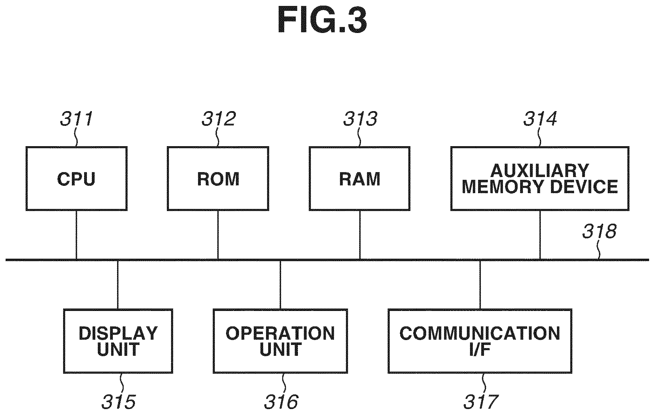

Fig. 3 is a block diagram illustrating a hardware configuration of the image generation apparatus 120. The image generation apparatus 120 includes a central processing unit (CPU) 311, a read-only memory (ROM) 312, a random access memory (RAM) 313, an auxiliary memory device 314, a display unit 315, an operation unit 316, a communication interface (I/F) 317, and a bus 318.

The CPU 311 controls the entire image generation apparatus 120 illustrated in Fig. 1 by using computer programs and data stored in the ROM 312 or the RAM 313 to implement the functions of the image generation apparatus 120. Alternatively, the image generation apparatus 120 can include a single piece of dedicated hardware or a plurality of pieces of dedicated hardware different from the CPU 311, and at least part of the processing of the CPU 311 can be performed by the dedicated hardware. Examples of the dedicated hardware include an application-specific integrated circuit (ASIC), a field programmable gate array (FPGA), and a digital signal processor (DSP). The ROM 312 stores programs that are not to be changed. The RAM 313 temporarily stores programs and data supplied from the auxiliary memory device 314 and stores data supplied from external sources via the communication I/F 317.

The auxiliary memory device 314 is composed of, for example, a hard disk drive (HDD) or a solid state drive, and stores various types of data such as image data and audio data.

The display unit 315 includes, for example, a liquid crystal display or a light emitting diode (LED) and displays a graphical user interface (GUI) via which the user operates the image generation apparatus 120. The operation unit 316 includes, for example, a keyboard, a mouse, a joystick, or a touch panel. The operation unit 316 receives user operations and transmits various instructions to the CPU 311. The CPU 311 operates as a display control unit for controlling the display unit 315 and as an operation control unit for controlling the operation unit 316. The communication I/F 317 is used to communicate with an external apparatus outside the image generation apparatus 120. For example, in a case where the image generation apparatus 120 is connected to an external apparatus by wire, a communication cable is connected to the communication I/F 317. In a case where the image generation apparatus 120 has a function of wirelessly communicating with an external apparatus, the communication I/F 317 includes an antenna. The bus 318 connects the components of the image generation apparatus 120 and transfers information therebetween.

While the display unit 315 and the operation unit 316 are included inside the image generation apparatus 120 in the present embodiment, at least one of the display unit 315 and the operation unit 316 can be provided as a separate apparatus outside the image generation apparatus 120.

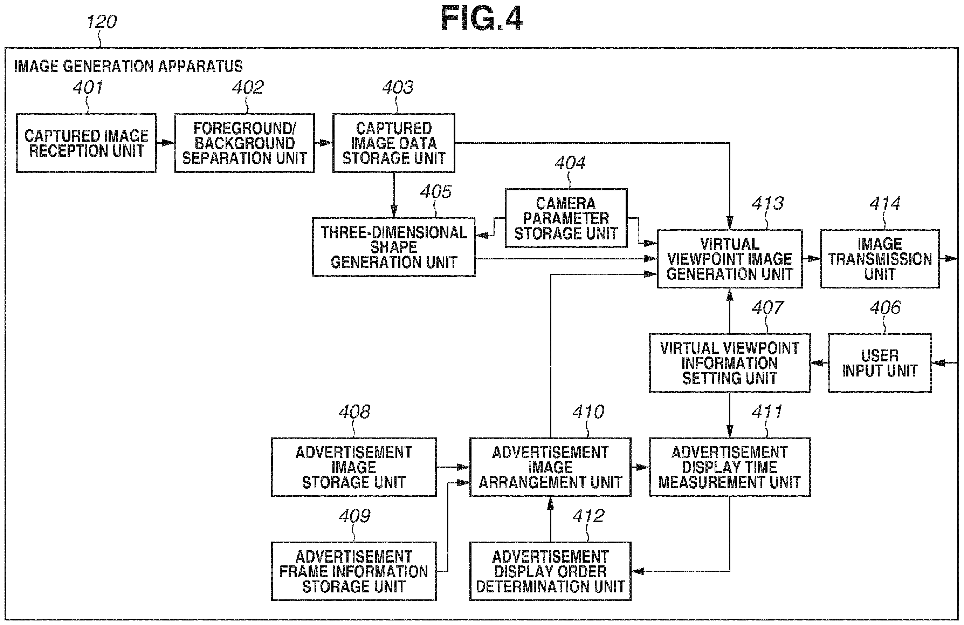

Fig. 4 is a block diagram illustrating a functional configuration of the image generation apparatus 120.

A captured image reception unit 401 converts transmission signals received from the imaging apparatuses 110 via the LAN cables into captured image data and transmits the captured image data to a foreground/background separation unit 402.

The foreground/background separation unit 402 stores, as background image data, images of scenes without imaging target subjects (such as those captured before the start of imaging the subjects) among the captured image data received from the captured image reception unit 401. The foreground/background separation unit 402 also transmits the background image data to a captured image data storage unit 403. The foreground/background separation unit 402 also extracts the imaging target subjects based on a difference between the images captured in a state where the subjects are in an imaging range and the stored background image data and transmits the extracted subjects as foreground image data to the captured image data storage unit 403.

The captured image data storage unit 403 is a database that stores the foreground image data and the background image data received from the foreground/background separation unit 402. The captured image data storage unit 403 also transmits the foreground image data to a three-dimensional shape generation unit 405. The captured image data storage unit 403 also transmits the foreground image data and the background image data for use in rendering to a virtual viewpoint image generation unit 413.

A camera parameter storage unit 404 pre-stores, as camera parameter information, camera position information about a plurality of predetermined imaging cameras (e.g., the imaging apparatuses 110) installed to surround the subjects and camera setting information such as focal lengths of the imaging cameras. The imaging cameras are installed at predetermined positions. The camera parameter storage unit 404 transmits the camera parameter information to the three-dimensional shape generation unit 405 and the virtual viewpoint image generation unit 413.

The three-dimensional shape generation unit 405 estimates the shapes of the subjects based on the foreground image data received from the captured image data storage unit 403 and the camera parameter information received from the camera parameter storage unit 404. In estimating the shapes of the subjects, for example, Visual Hull (e.g., "Shape from Silhouette") is used. As a result of the processing, three-dimensional point groups (e.g., sets of points having three-dimensional coordinates) representing the three-dimensional shapes of the subjects are obtained. The method for deriving the shapes of the subjects from the captured images is not limited thereto. The three-dimensional shape generation unit 405 transmits the obtained three-dimensional shape information to the virtual viewpoint image generation unit 413.

A user input unit 406 converts the transmission signals received from the terminal apparatus 130 via the LAN cable into user input data. In a case where the user input data is reproduction time information and virtual viewpoint information, the user input unit 406 transmits the reproduction time information and the virtual viewpoint information to a virtual viewpoint information setting unit 407.

The virtual viewpoint information setting unit 407 updates the current position and line-of-sight direction of the virtual viewpoint in a virtual space and the reproduction time based on the reproduction time information and the virtual viewpoint information received from the user input unit 406.

The virtual viewpoint information setting unit 407 then transmits the reproduction time information and the virtual viewpoint information to the virtual viewpoint image generation unit 413 and an advertisement display time measurement unit 411. The origin of the virtual space, such as the center in a stadium, is preset.

Advertisement image data, such as a company name logo, a product name logo, or a product image of a company to be displayed as an advertisement on the virtual space, is provided to an advertisement image storage unit 408 by an advertiser, and is stored in advance in the advertisement image storage unit 408. The advertisement image storage unit 408 also transmits the advertisement image data to an advertisement image arrangement unit 410.

An advertisement frame information storage unit 409 stores advertisement frame setting information including information about a position and a region on the three-dimensional virtual space where advertisement images are to be arranged. A virtual advertisement frame is preset for each imaging region. For example, a virtual advertisement frame is set on a wall of a stand in a virtual space obtained by capturing images of a stadium, so that a virtual advertisement is displayed on the wall when the virtual space based on the real world is viewed from the virtual viewpoint, although the virtual advertisement does not actually exist on the wall of the stadium. The virtual advertisement frame is not limited to a two-dimensional region, and can be a three-dimensional region. The position of the virtual advertisement frame is set based on the background models. More specifically, a cuboid virtual advertisement frame can be set outside a field and next to a corner flag post in a soccer stadium. The advertisement frame information storage unit 409 transmits the advertisement frame setting information to the advertisement image arrangement unit 410.

The advertisement image arrangement unit 410 generates arranged advertisement images by arranging each advertisement image at the position on the virtual space that is specified by the advertisement frame setting information, based on the advertisement image data received from the advertisement image storage unit 408 and the advertisement frame setting information received from the advertisement frame information storage unit 409. The position specified by the advertisement frame setting information corresponds to one advertisement frame and at least one advertisement image. The at least one advertisement image is used and displayed as a virtual advertisement based on advertisement display instruction information received from an advertisement display order determination unit 412. The advertisement image arrangement unit 410 then transmits the arranged advertisement images to the virtual viewpoint image generation unit 413. The advertisement image arrangement unit 410 also transmits arranged virtual advertisement information to the advertisement display time measurement unit 411.

The advertisement display time measurement unit 411 measures a time during which each virtual advertisement is displayed with a predetermined angle and size in the virtual viewpoint image, based on the reproduction time information and the virtual viewpoint information received from the virtual viewpoint information setting unit 407 and the arranged virtual advertisement information received from the advertisement image arrangement unit 410.

The advertisement display time measurement unit 411 transmits virtual advertisement display time information (i.e., about the display of the advertisement images corresponding to the arranged virtual advertisement information) to the advertisement display order determination unit 412. The predetermined angle herein is, for example, 45 degrees or less for the case where the angle at which the surface of the virtual advertisement faces the virtual viewpoint is 0 degrees. The predetermined size is not less than 3% of the virtual viewpoint image generated based on the virtual viewpoint. The predetermined angle and the predetermined size are not limited thereto and can be changed.

The advertisement display order determination unit 412 receives the virtual advertisement display time information from the advertisement display time measurement unit 411. The advertisement display order determination unit 412 transmits, to the advertisement image arrangement unit 410, the advertisement display instruction information for displaying an advertisement image in the virtual advertisement frame based on the virtual advertisement display time information. In this way, the advertisement display order determination unit 412 may be configured to control when (e.g., at what time) the virtual advertisement frame disappears from the virtual viewpoint and/or when it is displayed (e.g., in a case where the virtual advertisement frame disappears and is later displayed again). For example, in a case where the display times of two or more advertisement images are determined (e.g., measured), the advertisement display instruction information is set so that the virtual advertisement image with the shortest display time is displayed at a time when the virtual advertisement frame is displayed (e.g., again), and is transmitted to the advertisement image arrangement unit 410.

The virtual viewpoint image generation unit 413 receives the virtual viewpoint information from the virtual viewpoint information setting unit 407. The virtual viewpoint image generation unit 413 also receives the captured image data from the captured image data storage unit 403. The virtual viewpoint image generation unit 413 also receives the camera parameter information from the camera parameter storage unit 404. The virtual viewpoint image generation unit 413 also receives the three-dimensional shape information from the three-dimensional shape generation unit 405, and performs rendering processing on the three-dimensional shape information viewed from the virtual viewpoint by using color information based on the camera parameter information and the captured image data. The virtual viewpoint image generation unit 413 transmits a virtual viewpoint image obtained by the rendering to an image transmission unit 414.

The rendering herein is, for example, rendering (e.g., coloring processing) on the three-dimensional shapes of the subjects viewed from a virtual viewpoint position, using color information of the captured image data acquired at a corresponding time by the real cameras.

In a case where the subjects based on the three-dimensional shape information are visible from the virtual viewpoint and the real cameras are positioned within a predetermined range from the position of the virtual viewpoint, a rendering image of the subjects is generated using the shape colors of the foreground image data from the real cameras. Then, the background image data stored separately in the captured image data storage unit 403, the arranged virtual advertisement information received from the advertisement image arrangement unit 410, and the rendering image of the subjects captured from the virtual viewpoint position are combined into a virtual viewpoint image.

The image transmission unit 414 converts the virtual viewpoint image received from the virtual viewpoint image generation unit 413 into transmission signals transmissible to the terminal apparatus 130 and transmits the transmission signals to the terminal apparatus 130.

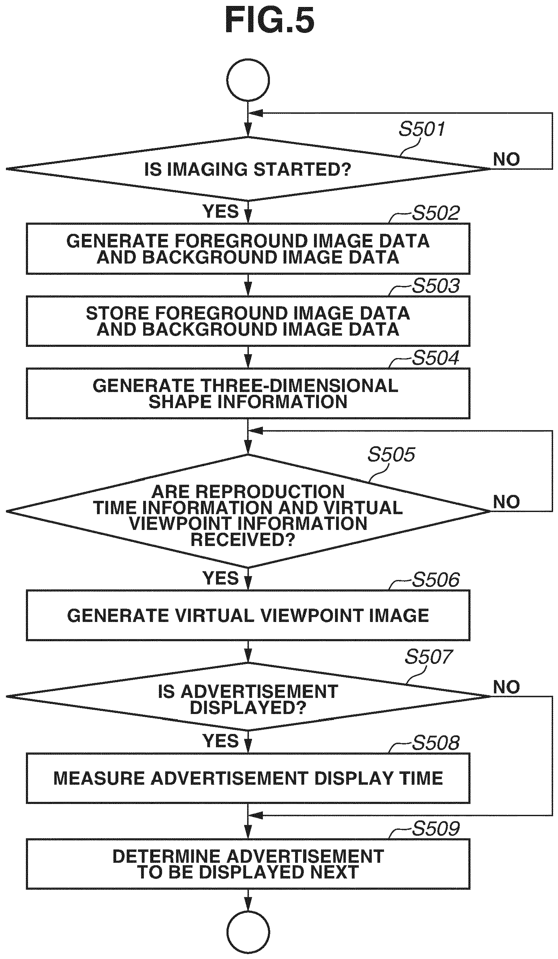

Fig. 5 is a flowchart illustrating an operation procedure performed by the image generation apparatus 120 according to the present embodiment.

In step S501, the captured image reception unit 401 determines whether the images captured by the plurality of imaging apparatuses 110 (e.g., real cameras) are received via the plurality of imagine apparatuses 110, i.e., to determine whether imaging has started. In a case where the captured images are not received (NO in step S501), loop processing is performed to wait in step S501. In a case where the captured images are received (YES in step S501), the processing proceeds to step S502.

In step S502, the foreground/background separation unit 402 generates foreground image data by extracting subjects from the captured images of the subjects and generates background image data that are images without the subjects. The foreground/background separation unit 402 transmits the generated foreground image data and the generated background image data to the captured image data storage unit 403.

In step S503, the captured image data storage unit 403 stores the foreground image data and the background image data generated by the foreground/background separation unit 402.

In step S504, the three-dimensional shape generation unit 405 generates the three-dimensional shapes of the subjects (e.g., subject shape information or three-dimensional shape information) based on the camera parameter information received from the camera parameter storage unit 404 and the foreground image data stored in the captured image data storage unit 403. The subject shape information includes groups of points, and each of the points includes position information.

In step S505, the virtual viewpoint information setting unit 407 determines whether reproduction time information and virtual viewpoint information are received via the user input unit 406. In a case where reproduction time information and virtual viewpoint information are received (YES in step S505), the processing proceeds to step S506. In a case where reproduction time information and virtual viewpoint information are not received (NO in step S505), loop processing is performed to wait in step S505.

In step S506, the virtual viewpoint image generation unit 413 receives captured image data from the captured image data storage unit 403 in order to generate a viewpoint image viewed from the virtual viewpoint position based on the virtual viewpoint information received from the virtual viewpoint information setting unit 407. The virtual viewpoint image generation unit 413 also receives the three-dimensional shape information from the three-dimensional shape generation unit 405 and receives the arranged virtual advertisement information from the advertisement image arrangement unit 410. The virtual viewpoint image generation unit 413 performs the rendering processing based on the received virtual viewpoint information, the received captured image data, the received three-dimensional shape information, and the received arranged virtual advertisement information. The virtual viewpoint image generation unit 413 transmits a virtual viewpoint image obtained by the rendering to the image transmission unit 414.

In step 507, the advertisement display time measurement unit 411 determines whether a virtual advertisement is displayed when viewed from the virtual viewpoint, based on the virtual viewpoint information received from the virtual viewpoint information setting unit 407 and the arranged virtual advertisement information received from the advertisement image arrangement unit 410. In other words, the advertisement display time measurement unit 411 determines whether the virtual advertisement frame is in the visual field of the virtual camera. Alternatively, the advertisement display time measurement unit 411 determines whether a virtual advertisement is displayed in the virtual viewpoint image. This determination is made because a virtual advertisement may not sometimes be displayed in the virtual viewpoint image due to a change in the position of the virtual camera relative to the virtual advertisement frame that is caused by the user operating the virtual camera with respect to the position of the virtual advertisement frame set within the three-dimensional space. In the present embodiment, the virtual advertisement frame is entirely included in the virtual viewpoint image and a virtual advertisement is entirely displayed, but the present embodiment is not limited thereto. For example, only a part of a virtual advertisement may be displayed in the virtual viewpoint image.

In step S508, the advertisement display time measurement unit 411 measures the display time of each virtual advertisement displayed in the virtual viewpoint image and transmits the virtual advertisement display time information to the advertisement display order determination unit 412.

In step S509, the advertisement display order determination unit 412 transmits, to the advertisement image arrangement unit 410, the advertisement display instruction information specifying the display of an advertisement image to be arranged in the virtual advertisement frame at the next frame time, based on the virtual advertisement display time information received from the advertisement display time measurement unit 411. For example, in a case where the display times of two or more virtual advertisement images are determined, the advertisement display instruction information is set to display the virtual advertisement image with the shortest display time, and is transmitted to the advertisement image arrangement unit 410.

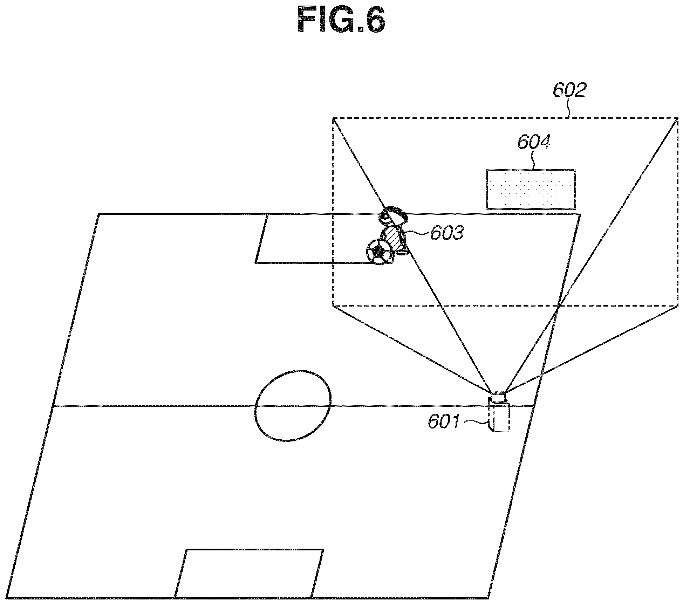

Fig. 6 is a conceptual diagram illustrating a virtual space according to the present embodiment. In the virtual space generated based on the images captured by the imaging apparatuses 110, an imaging range 602 (or region) is set for a virtual viewpoint 601, and a subject 603 is being imaged. A virtual advertisement frame 604 (or part of the region) for displaying a virtual advertisement is included in the imaging range 602. While the virtual advertisement frame 604 is a two-dimensional virtual advertisement frame, the virtual advertisement frame 604 can be a three-dimensional virtual advertisement frame. For example, the virtual advertisement frame 604 can be a cuboid, cylindrical, or conic virtual advertisement frame.

On the virtual viewpoint image, a specified advertisement image is to be arranged and displayed in the virtual advertisement frame 604.

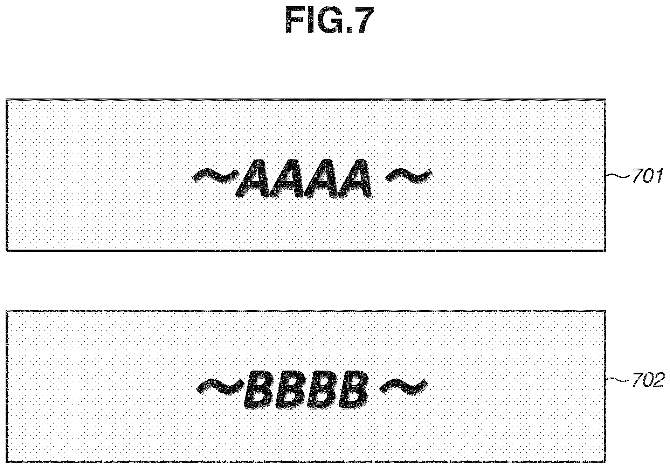

Fig. 7 is a diagram illustrating examples of the virtual advertisement image. A virtual advertisement image 701, such as a company name logo, a product name logo, or a product image of a company, is provided in a predetermined data format by an advertiser. A virtual advertisement image 702, such as a company name logo, a product name logo, or a product image of a company, is similar to the virtual advertisement image 701, but is different in content from the virtual advertisement image 701.

While each of the virtual advertisement images 701 and 702 has a size and an aspect ratio that fit in the virtual advertisement frame 604 included in arranged virtual advertisement information, change processing (such as scaling, aspect ratio change, and/or margin addition) can be performed in a case where the virtual advertisement image 701 or 702 does not fit in the virtual advertisement frame 604. While a virtual advertisement is described as a two-dimensional advertisement image in the present disclosure, the present embodiment is not limited thereto. Three-dimensional digital content can be used as a virtual advertisement, and in this case, the virtual advertisement is associated with a three-dimensional virtual advertisement frame.

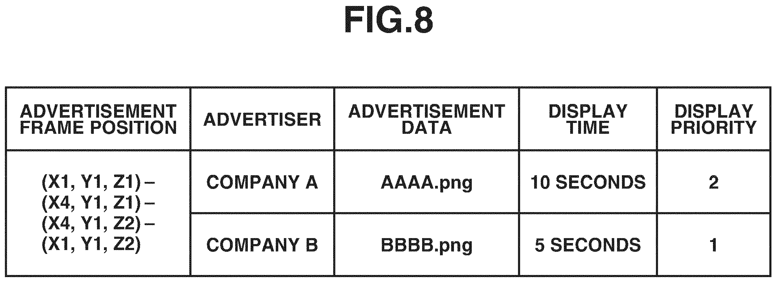

Fig. 8 is a diagram illustrating display priorities of the virtual advertisement images 701 and 702. In the present embodiment, the virtual advertisement images 701 and 702 of companies A and B are associated with a single virtual advertisement frame, i.e., the virtual advertisement frame 604. Since the virtual advertisement frame 604 is a two-dimensional rectangle, the position of the virtual advertisement frame 604 includes, but not limited to, positions of four points of the rectangle. While the position of the virtual advertisement frame 604 is predefined in the three-dimensional space based on the background models in the present embodiment, the present embodiment is not limited thereto. The position of the virtual advertisement frame 604 can change continuously. The display time of each of the virtual advertisement images 701 and 702 corresponds to the virtual advertisement display time information received from the advertisement display time measurement unit 411. For example, the virtual advertisement image 701 of the company A is displayed for 10 seconds, and the virtual advertisement image 702 of the company B is displayed for 5 seconds. In this case, in order to display the virtual advertisement image with the shorter display time, a display priority of 1 is set for the virtual advertisement image 702 of the company B, and a display priority of 2 is set for the virtual advertisement image 701 of the company A. Then, an instruction to display the virtual advertisement image 702 of the company B is issued at timing when the virtual viewpoint 601 moves and the virtual advertisement frame 604 is displayed in the virtual viewpoint image.

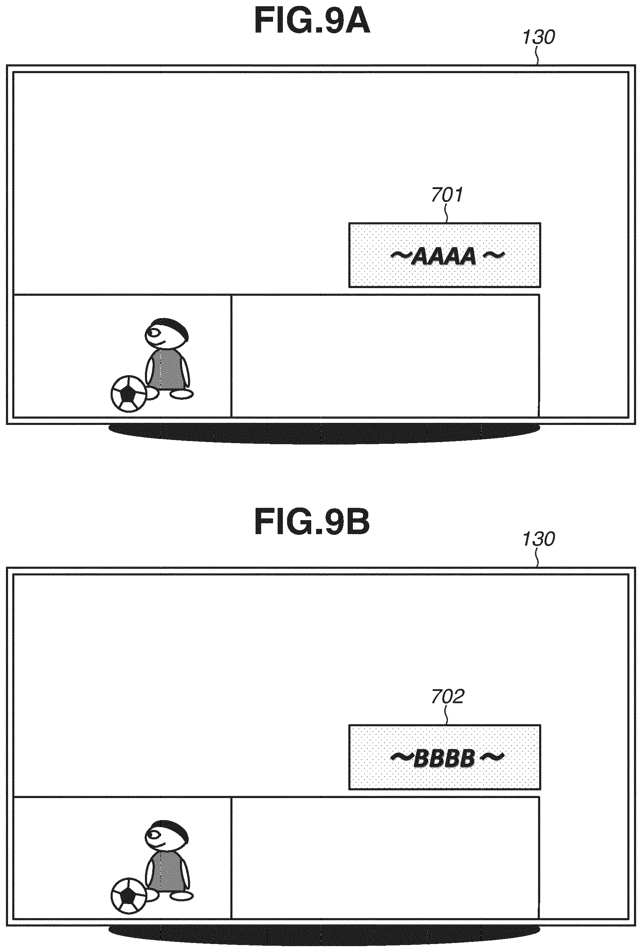

Figs. 9A and 9B illustrate screen display examples of the virtual viewpoint image displayed on the terminal apparatus 130, respectively. In Fig. 9A, the virtual advertisement image 701 of the company A is displayed from the virtual viewpoint 601 for 10 seconds in the virtual space where the virtual advertisement image 701 is arranged at the position of the virtual advertisement frame 604. Thereafter (e.g., immediately thereafter), the virtual viewpoint 601 moves to a position where the virtual advertisement frame 604 is not displayed, and then (e.g., at a later point in time) the virtual advertisement frame 604 is displayed again from the virtual viewpoint 601. At this stage (i.e., when the virtual advertisement frame 604 is displayed again in the virtual viewpoint 601), since a display priority of 1 is set for the virtual advertisement image 702 of the company B (i.e., due to prioritization of virtual advertisement images with shorter display times, as shown in Fig. 8), the virtual advertisement image 702 of the company B is displayed, as illustrated in Fig. 9B.

As described above, according to the present embodiment, a virtual advertisement to be displayed next among a plurality of virtual advertisements is determined based on the display time of each virtual advertisement displayed in a virtual viewpoint image. This makes it possible to display each virtual advertisement appropriately in the virtual viewpoint image. Thus, in a case where a plurality of users operates a virtual viewpoint, the virtual advertisement to be displayed in the virtual viewpoint image is determined based on the virtual viewpoint operation by each user, so that a plurality of virtual advertisements is displayed fairly to each user. Thus, according to the present embodiment, in a situation where a plurality of virtual objects (e.g., virtual advertisements) is displayed interchangeably in a display region (e.g., the plurality of virtual objects are displayed at a specified location within the display region (e.g., a single location), and the specified location is configured to switch between two or more of the plurality of virtual objects), each of the virtual objects is displayed appropriately in the virtual viewpoint image.

While a higher display priority is set for a virtual advertisement image with a shorter display time (e.g., when the determined display time of a first virtual object is shorter than the determined display time of s second virtual object), the present embodiment is not limited thereto. In certain situations, a higher display priority may only be set for a virtual advertisement image with a shorter display time if a difference in display time between two virtual advertisement images is greater than a predetermined time.

For example, in a case where the virtual advertisement image 701 of company A has a longer display time than the virtual advertisement image 702 of company B (i.e., the company A advertisement has already been displayed for a longer time than the company B advertisement) and the difference in display time between the virtual advertisement images 701 and 702 of companies A and B is greater than 10 seconds, then a higher display priority is set for the virtual advertisement image 702 of the company B. This prevents frequent switching between the virtual advertisement images 701 and 702 in a case where the virtual viewpoint 601 moves quickly and the virtual advertisement frame 604 is displayed only for a short time in the virtual viewpoint image.

While the display priorities of the virtual advertisement images 701 and 702 are determined based on the display times of the virtual advertisement images 701 and 702 in the present embodiment, the present embodiment is not limited thereto. In a case where different advertisement fees are paid for different virtual advertisement images, the display priorities can be determined based on the advertisement fees paid for the virtual advertisement images 701 and 702 and the display times of the virtual advertisement images 701 and 702.

The advertisement fees are, for example, money, virtual currencies, non-fungible tokens, or points. For example, in a case where 200,000 yen is paid for the virtual advertisement image 701 of the company A and 100,000 yen is paid for the virtual advertisement image 702 of the company B, the display time of the virtual advertisement image 701 of the company A can be determined to be 20 seconds, and the display time of the virtual advertisement image 702 of the company B can be determined to be 10 seconds. Consequently, in a case where the virtual viewpoint 601 moves to a position where the virtual advertisement frame 604 is not displayed and then moves to a position where the virtual advertisement frame 604 is displayed, if the display time of the virtual advertisement image 701 of the company A is shorter than 20 seconds, the virtual advertisement image 701 of the company A is displayed. In a case where the display time of the virtual advertisement image 701 of the company A reaches 20 seconds (i.e., is determined to have a display time of 20 seconds or more), then the virtual advertisement image 702 of the company B is displayed. Similarly, in a case where the virtual viewpoint 601 moves to a position where the virtual advertisement frame 604 is not displayed and then moves to a position where the virtual advertisement frame 604 is displayed, if the display time of the virtual advertisement image 702 of the company B is shorter than 10 seconds, the virtual advertisement image 702 of the company B is displayed. This makes it possible to display the virtual advertisement images 701 and 702 fairly in the virtual viewpoint image distributed to the users, based on the advertisement fees.

In a second embodiment, an example will be described where there is a plurality of virtual advertisement frames and priorities of virtual advertisement images are set based on positions of the plurality of virtual advertisement frames. A configuration of an image processing system according to the present embodiment is similar to the configuration according to the first embodiment, and redundant descriptions thereof will thus be omitted. A hardware configuration of an image generation apparatus 1000 according to the present embodiment is also similar to the hardware configuration illustrated in Fig. 3, and redundant descriptions thereof will thus be omitted.

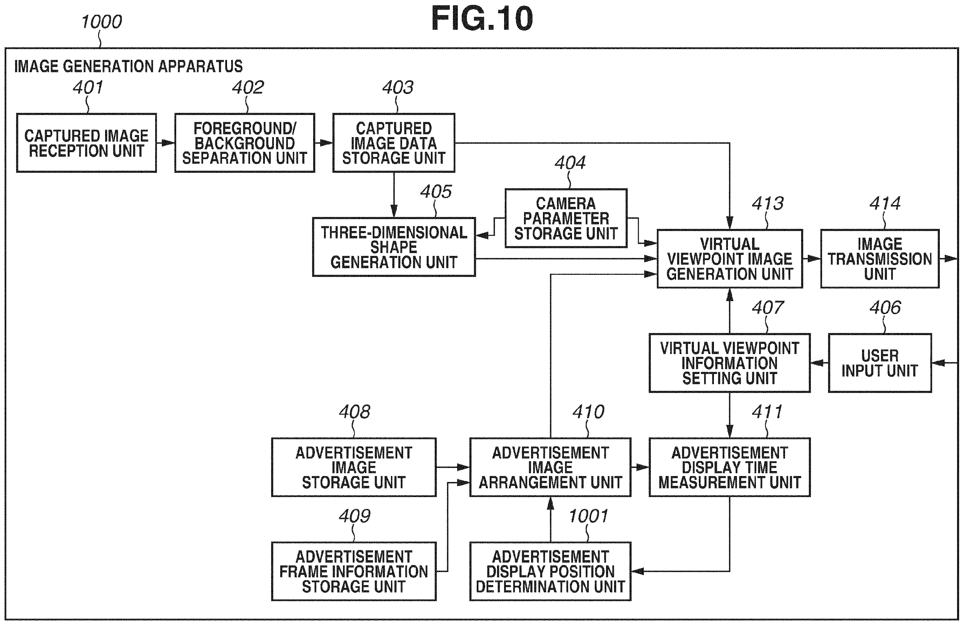

Fig. 10 is a diagram illustrating a functional configuration of the image generation apparatus 1000 according to the present embodiment. The functional configuration is similar to the functional configuration illustrated in Fig. 4 except that an advertisement display position determination unit 1001 is included in place of the advertisement display order determination unit 412, and redundant descriptions thereof will thus be omitted.

The advertisement display position determination unit 1001 receives the virtual advertisement display time information from the advertisement display time measurement unit 411. The advertisement display position determination unit 1001 transmits, to the advertisement image arrangement unit 410, advertisement position instruction information specifying how to arrange the plurality of advertisement images in the plurality of virtual advertisement frames based on the virtual advertisement display time information, in a case where the virtual advertisement frames disappear from the virtual viewpoint 601 and are then displayed again in a virtual viewpoint image. For example, in a situation where there are two virtual advertisement frames, and one of the virtual advertisement frames is closer to the virtual viewpoint 601 while the other is farther from the virtual viewpoint 601. In a case where the display times of two or more virtual advertisement images are determined, the advertisement display instruction information is set so that the virtual advertisement image with the shortest display time is displayed at the position of the advertisement frame closer to the virtual viewpoint 601, and is transmitted to the advertisement image arrangement unit 410.

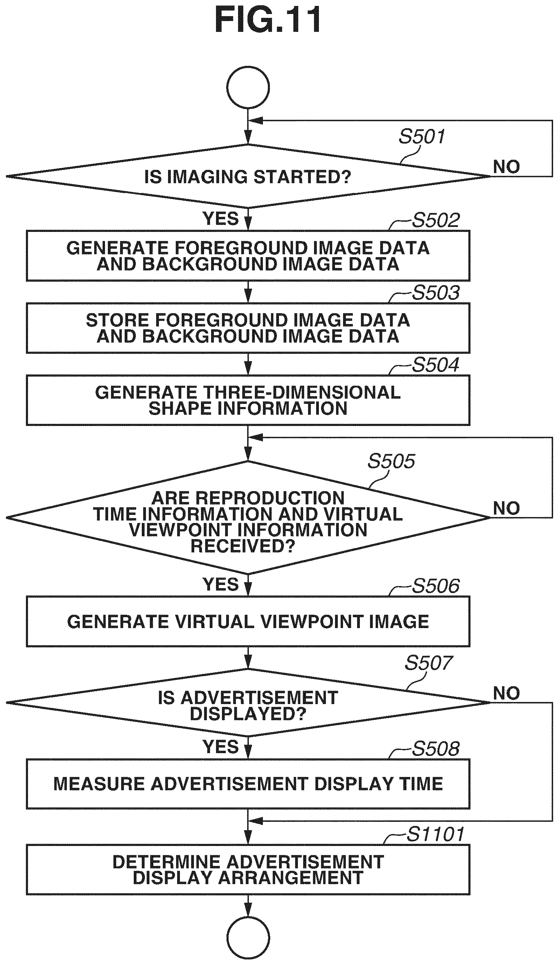

Fig. 11 is a flowchart illustrating an operation procedure performed by the image generation apparatus 1000 according to the present embodiment.

Steps S501 to S508 are similar to those in Fig. 5, and redundant descriptions thereof will thus be omitted.

In step S1101, the advertisement display position determination unit 1001 receives the virtual advertisement display time information in step S508 from the advertisement display time measurement unit 411. The advertisement display position determination unit 1001 transmits, to the advertisement image arrangement unit 410, the advertisement position instruction information specifying how to arrange the plurality of advertisement images in the plurality of virtual advertisement frames based on the virtual advertisement display time information, in a case where the virtual advertisement frames disappear from the virtual viewpoint 601 and are then displayed again in the virtual viewpoint image.

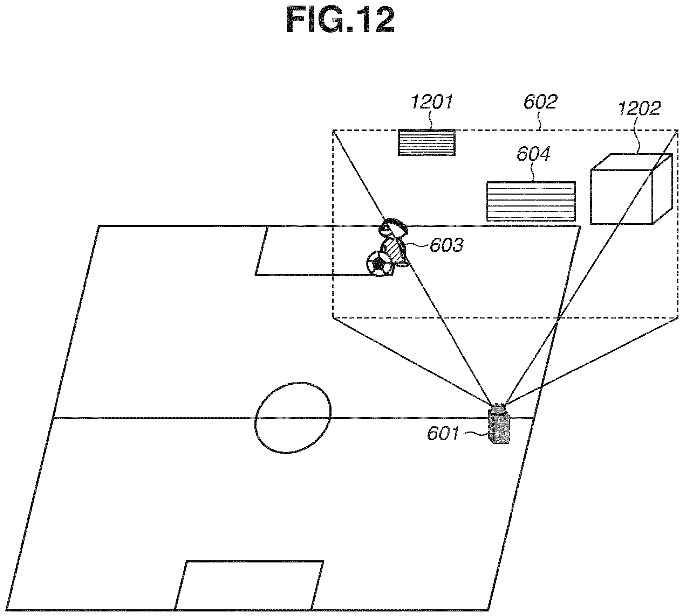

Fig. 12 is a conceptual diagram illustrating a virtual space according to the present embodiment. In addition to the conceptual diagram in Fig. 6, a virtual advertisement frame 1201 is set behind the virtual advertisement frame 604, and a virtual advertisement frame 1202 is set to the right of the virtual advertisement frame 604. The virtual advertisement frame 1201 is used to display a two-dimensional virtual advertisement, and the virtual advertisement frame 1202 is used to display a three-dimensional virtual advertisement. While the virtual advertisement frame 1202 (the three-dimensional virtual advertisement frame) has a cubic shape, the shape of the virtual advertisement frame 1202 is not limited to the cubic shape and can be a cuboid, cylindrical, or conic shape. In the virtual advertisement frame 1202 for displaying a three-dimensional virtual advertisement, a two-dimensional virtual advertisement can also be displayed. In this case, the two-dimensional virtual advertisement is displayed on a specific surface of the virtual advertisement frame 1202 (the three-dimensional virtual advertisement frame). On the virtual viewpoint image, specified advertisement images are arranged and displayed in the virtual advertisement frames 604, 1201, and 1202.

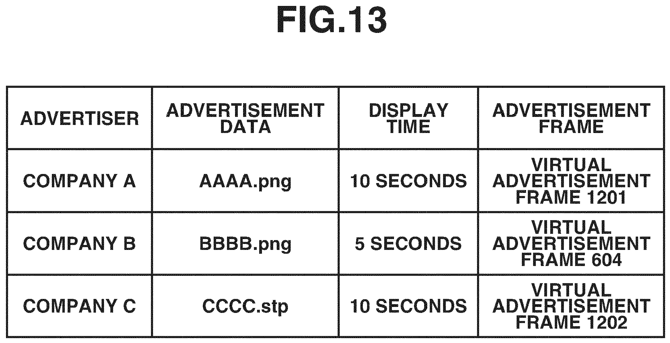

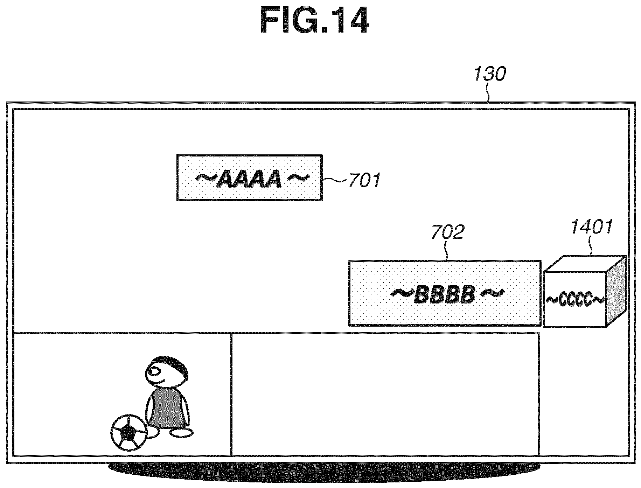

Fig. 13 is a diagram illustrating correspondence relationships between virtual advertisement images and the virtual advertisement frames 604, 1201, and 1202. Each display time corresponds to the virtual advertisement display time information received from the advertisement display time measurement unit 411. For example, the virtual advertisement image 701 of the company A is displayed for 10 seconds. The virtual advertisement image 702 of the company B is displayed for 5 seconds, and a virtual advertisement image 1401 (see Fig. 14) of a company C is displayed for 10 seconds. In this case, in order to increase the display area of the virtual advertisement image with the shortest display time when viewed from the position of the virtual viewpoint 601, the virtual advertisement frame 604 closer to the virtual viewpoint 601 is set for the virtual advertisement image 702 of the company B, and the virtual advertisement frame 1201 farther from the virtual viewpoint 601 is set for the virtual advertisement image 701 of the company A. Since the virtual advertisement image 1401 of the company C is a three-dimensional virtual advertisement, the virtual advertisement frame 1202 (the three-dimensional virtual advertisement frame) is set for the virtual advertisement image 1401 of the company C.

Fig. 14 is a diagram illustrating a screen display example of the virtual viewpoint image displayed on the terminal apparatus 130. In order to set a prioritized advertisement display frame for a virtual advertisement image with a shorter display time as in Fig. 13, the virtual advertisement frame 604 on the closer side is set for the virtual advertisement image 702 of the company B, and the virtual advertisement image 701 of the company A is displayed in the virtual advertisement frame 1201 on the farther side. Since the virtual advertisement image 1401 of the company C is a three-dimensional object, the virtual advertisement image 1401 is displayed in the virtual advertisement frame 1202 (the three-dimensional virtual advertisement frame). In a case where there is a plurality of three-dimensional virtual advertisement frames, a virtual advertisement image with a shorter display time is prioritized and displayed in the virtual advertisement frame having a greater display area when viewed from a virtual viewpoint position, as in the case where the virtual advertisement frames 1201 and 604 for displaying the virtual advertisement images 701 and 702 of the companies A and B are set.

As described above, the configuration according to the present embodiment enables, in a case where a plurality of advertisement frames is used, a virtual advertisement image with a shorter display time to be arranged in a closer virtual advertisement frame, and each virtual advertisement image to be displayed in an appropriate size to each user.

Alternatively, an advertiser can specify a virtual advertisement frame to display a virtual advertisement image, and in this case, information associating the virtual advertisement image with the specified virtual advertisement frame among the plurality of virtual advertisement frames is also transmitted to the advertisement image arrangement unit 410.

In a third embodiment, an example will be described where a virtual advertisement image has a predetermined reproduction time as in the case of a moving image.

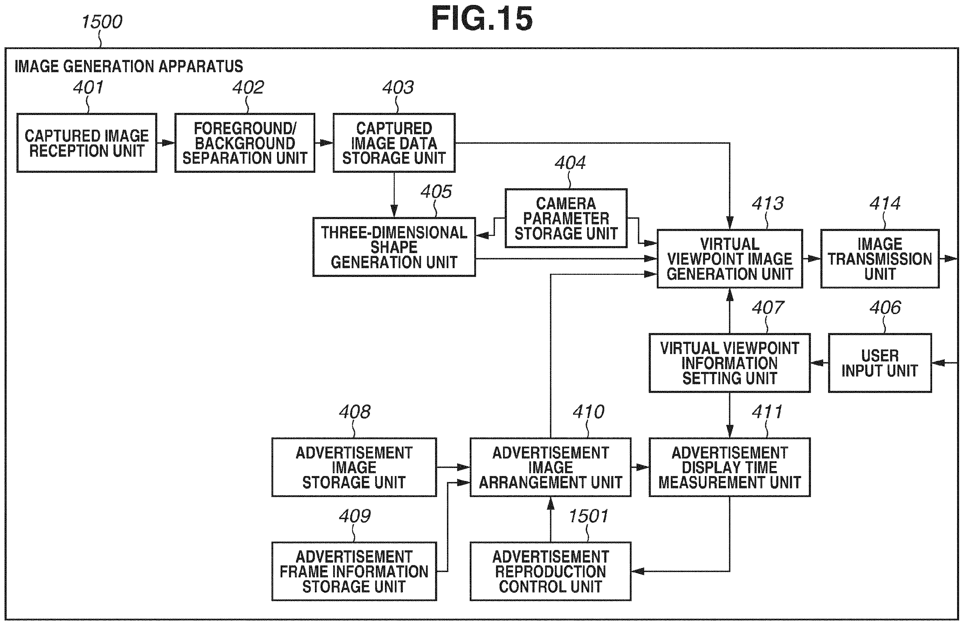

Fig. 15 is a block diagram illustrating a functional configuration of an image generation apparatus 1500 according to the present embodiment. The image generation apparatus 1500 includes an advertisement reproduction control unit 1501 in place of the advertisement display order determination unit 412 of the image generation apparatus 120 according to the first embodiment described above with reference to Fig. 4.

The advertisement reproduction control unit 1501 receives virtual advertisement display time information from the advertisement display time measurement unit 411. The advertisement reproduction control unit 1501 transmits, to the advertisement image arrangement unit 410, advertisement image display instruction information based on the virtual advertisement display time information and the reproduction time of each advertisement image to be arranged in a virtual advertisement frame, in a case where the virtual advertisement frame disappears from a virtual viewpoint and is then displayed again.

For example, in a case where a reproduction time of 30 seconds is set for two or more virtual advertisement images and the display times of the virtual advertisement images are determined, the advertisement image display instruction information is set so that the same virtual advertisement image is displayed until the display time reaches the reproduction time of 30 seconds, and is transmitted to the advertisement image arrangement unit 410.

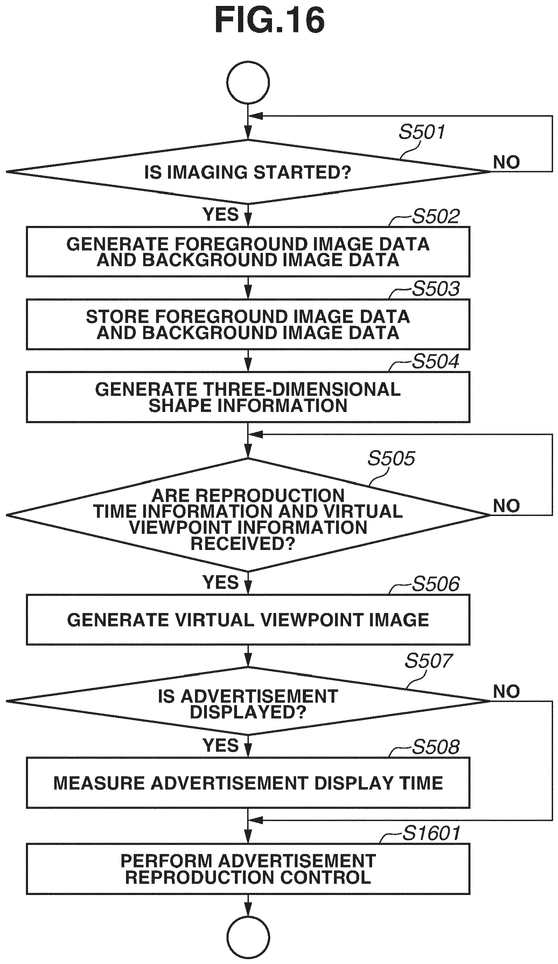

Fig. 16 is a flowchart illustrating an operation procedure performed by the image generation apparatus 1500 according to the present embodiment. Steps S501 to S508 are similar to those in Fig. 5, and redundant descriptions thereof will thus be omitted.

In step S 1601, the advertisement reproduction control unit 1501 receives the virtual advertisement display time information from the advertisement display time measurement unit 411. The advertisement reproduction control unit 1501 transmits, to the advertisement image arrangement unit 410, the advertisement image display instruction information based on the virtual advertisement display time information and the reproduction time of each advertisement image to be arranged in the virtual advertisement frame, in a case where the virtual advertisement frame disappears once from the virtual viewpoint and is then displayed again.

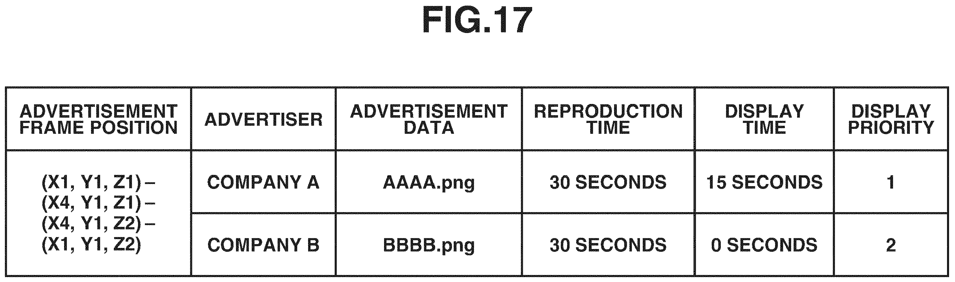

Fig. 17 is a diagram illustrating the display priorities of the virtual advertisement images 701 and 702 according to the present embodiment. Suppose that a reproduction time of 30 seconds is set for each of the virtual advertisement images 701 and 702, and the virtual advertisement display time information received from the advertisement display time measurement unit 411 indicates, for example, the virtual advertisement image 701 of the company A is displayed for 15 seconds and the virtual advertisement image 702 of the company B is displayed for 0 seconds. In this case, although the virtual advertisement image with the shorter display time is the virtual advertisement image 702 of the company B, a display priority of 1 is set for the virtual advertisement image 701 of the company A and a display priority of 2 is set for the virtual advertisement image 702 of the company B in order to display the virtual advertisement image 701 of the company A, whose display time has not reached the reproduction time. An instruction to display the virtual advertisement image 701 of the company A is issued at timing when the virtual viewpoint moves and the virtual advertisement frame is displayed, so that the virtual advertisement image 701 of the company A is displayed until the display time of the virtual advertisement image 701 of the company A reaches the reproduction time of 30 seconds. Once the display time of the virtual advertisement image 701 of the company A reaches 30 seconds, a display priority of 1 is set for the virtual advertisement image 702 of the company B.

As described above, the configuration according to the present embodiment enables each virtual advertisement visible from a virtual viewpoint to be displayed considering the reproduction time. This makes it possible to reduce the unfairness of opportunities to display a plurality of virtual advertisements while reflecting intended concepts of the advertisers of the virtual advertisements such as moving images as much as possible.

While the embodiments of the present disclosure have been described in detail above, the present disclosure is not limited to the above-described embodiments, and various modifications can be made based on the spirit of the present disclosure and are not excluded from the scope of embodiments of the present disclosure. For example, the first to third embodiments described above can be combined suitably.

A computer program for implementing part or whole of the control according to the above-described embodiments, i.e., the functions according to the above-described embodiments can be supplied to an image processing system via a network or various storage media. Then, a computer (or a CPU or a micro-processor unit (MPU)) of the image processing system can read the program and execute the read program. In this case, the program and a storage medium storing the program are included in the embodiments of the present disclosure.

The embodiments according to the present disclosure include the following configurations, method, and program.

### <Configuration 1>

An image processing system includes a first acquisition means for acquiring a visual field of a virtual camera that changes in position relative to a region where a first virtual object and a second virtual object are displayed interchangeably, a second acquisition means for acquiring, during a time in which the region is in the visual field of the virtual camera, a first display time indicating a time during which the first virtual object is displayed in the region and a second display time indicating a time during which the second virtual object is displayed in the region, and a generation means for generating, based on the first display time and the second display time, a virtual viewpoint image corresponding to the virtual camera, wherein the virtual viewpoint image includes one of the first virtual object and the second virtual object.

### <Configuration 2>

In the image processing system according to configuration 1, the generation means is configured to generate the virtual viewpoint image including the second virtual object in a case where the first display time is longer than the second display time, and generate the virtual viewpoint image including the first virtual object in a case where the first display time is shorter than the second display time.

### <Configuration 3>

In the image processing system according to configuration 1 or configuration 2, the generation means is configured to generate the virtual viewpoint image including the second virtual object in a case where the first display time is longer than the second display time and a difference between the first display time and the second display time is greater than a predetermined time, and generate the virtual viewpoint image including the first virtual object in a case where the first display time is shorter than the second display time and the difference between the first display time and the second display time is greater than the predetermined time.

### <Configuration 4>

In the image processing system according to any one of configuration 1 to 3, at least one of the first virtual object and the second virtual object is an image or a three-dimensional object.

### <Configuration 5>

In the image processing system according to configuration 4, at least one of the first virtual object and the second virtual object is a virtual advertisement, an image, a character string, an avatar, or digital content having a three-dimensional shape.

### <Configuration 6>

In the image processing system according to configuration 5, the digital content having the three-dimensional shape is cube-shaped digital content.

### <Configuration 7>

In the image processing system according to any one of configuration 1 to 6, at least one of the first display time and the second display time is acquired during a time in which a part of the region is in the visual field of the virtual camera.

### <Configuration 8>

In the image processing system according to any one of configurations 1 to 7, the region is a region in a three-dimensional space.

### <Configuration 9>

In the image processing system according to any one of configurations 1 to 7, the region has a two-dimensional planar shape.

### <Configuration 10>

In the image processing system according to any one of configurations 1 to 7, the region has a three-dimensional polyhedral shape.

### <Configuration 11>

In the image processing system according to any one of configurations 1 to 10, the second acquisition means is configured to acquire a first display priority indicating a priority for displaying the first virtual object in the region and a second display priority indicating a priority for displaying the second virtual object in the region, and the generation means is configured to generate the virtual viewpoint image including one of the first virtual object and the second virtual object based on the first display priority and the second display priority.

### <Configuration 12>

In the image processing system according to configuration 11, the first display priority is determined based on the first display time and an advertisement fee for the first virtual object, and the second display priority is determined based on the second display time and an advertisement fee for the second virtual object.

### <Method>

An image processing method includes acquiring a visual field of a virtual camera that changes in position relative to a region where a first virtual object and a second virtual object are displayed interchangeably, acquiring, during a time in which the region is in the visual field of the virtual camera, a first display time indicating a time during which the first virtual object is displayed in the region and a second display time indicating a time during which the second virtual object is displayed in the region, and generating, based on the first display time and the second display time, a virtual viewpoint image corresponding to the virtual camera, wherein the virtual viewpoint image includes one of the first virtual object and the second virtual object.

### <Program>

A computer program for causing a computer to control each means of the image processing system according to any one of configurations 1 to 12.

According to the embodiments of the present disclosure, in a case where a plurality of virtual objects is displayed interchangeably in a display region, each of the virtual objects can be appropriately displayed in a virtual viewpoint image.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

While the present invention has been described with reference to embodiments, it is to be understood that the invention is not limited to the disclosed embodiments but it is defined by the scope of the following claims.

## Claims

1. An image processing system (100) comprising:
a first acquisition means for acquiring a visual field of a virtual camera (601) that changes in position relative to a region (602) where a first virtual object and a second virtual object are displayed interchangeably;
a second acquisition means for acquiring, during a time in which the region is in the visual field of the virtual camera, a first display time indicating a time during which the first virtual object is displayed in the region and a second display time indicating a time during which the second virtual object is displayed in the region; and
a generation means for generating, based on the first display time and the second display time, a virtual viewpoint image corresponding to the virtual camera, wherein the virtual viewpoint image includes one of the first virtual object (701) and the second virtual object (702).

2. The image processing system according to claim 1, wherein the generation means is configured to generate the virtual viewpoint image including the second virtual object in a case where the first display time is longer than the second display time, and generate the virtual viewpoint image including the first virtual object in a case where the first display time is shorter than the second display time.

3. The image processing system according to claim 1 or claim 2, wherein the generation means is configured to generate the virtual viewpoint image including the second virtual object in a case where the first display time is longer than the second display time and a difference between the first display time and the second display time is greater than a predetermined time, and generate the virtual viewpoint image including the first virtual object in a case where the first display time is shorter than the second display time and the difference between the first display time and the second display time is greater than the predetermined time.

4. The image processing system according to any one of claims 1 to 3, wherein at least one of the first virtual object and the second virtual object is an image (1201) or a three-dimensional object (1202).

5. The image processing system according to claim 4, wherein at least one of the first virtual object and the second virtual object is a virtual advertisement, an image, a character string, an avatar, or digital content having a three-dimensional shape.

6. The image processing system according to claim 5, wherein the digital content having the three-dimensional shape is cube-shaped digital content.

7. The image processing system according to any one of claims 1 to 6, wherein at least one of the first display time and the second display time is acquired during a time in which a part of the region (604) is in the visual field of the virtual camera.

8. The image processing system according to any one of claims 1 to 7, wherein the region is a region in a three-dimensional space.

9. The image processing system according to any one of claims 1 to 7, wherein the region has a two-dimensional planar shape.

10. The image processing system according to any one of claims 1 to 7, wherein the region has a three-dimensional polyhedral shape.

11. The image processing system according to any one of the preceding claims,
wherein the second acquisition means is configured to acquire a first display priority indicating a priority for displaying the first virtual object in the region and a second display priority indicating a priority for displaying the second virtual object in the region;
wherein the generation means is configured to generate the virtual viewpoint image including one of the first virtual object and the second virtual object based on the first display priority and the second display priority.

12. The image processing system according to claim 11,
wherein the first display priority is determined based on the first display time and an advertisement fee for the first virtual object;
wherein the second display priority is determined based on the second display time and an advertisement fee for the second virtual object.

13. An image processing method comprising:
acquiring a visual field of a virtual camera (601) that changes in position relative to a region (602) where a first virtual object (701) and a second virtual object (702) are displayed interchangeably;
acquiring, during a time in which the region is in the visual field of the virtual camera, a first display time indicating a time during which the first virtual object is displayed in the region and a second display time indicating a time during which the second virtual object is displayed in the region; and
generating, based on the first display time and the second display time, a virtual viewpoint image corresponding to the virtual camera, wherein the virtual viewpoint image includes one of the first virtual object and the second virtual object.

14. A computer program for causing a computer to control each means of the image processing system according to any one of claims 1 to 12.
